# EUROPEAN PATENT SPECIFICATION

(11) **EP 3 440 460 B1**
(45) Date of publication and mention of the grant of the patent: **21.01.2026**
(21) Application number: 17715931.6
(22) Date of filing: 06.04.2017
(51) Int. Cl.: G01N 30/82, G01N 30/86

(54) **METHOD AND SYSTEM FOR PROVIDING INFORMATION FROM A FRACTION COLLECTOR IN A LIQUID CHROMATOGRAPHY SYSTEM**
VERFAHREN UND SYSTEM ZUR BEREITSTELLUNG VON INFORMATIONEN AUS EINEM FRAKTIONSSAMMLER IN EINEM FLÜSSIGCHROMATOGRAFIESYSTEM
PROCÉDÉ ET SYSTÈME POUR FOURNIR DES INFORMATIONS À PARTIR D'UN COLLECTEUR DE FRACTIONS DANS UN SYSTÈME DE CHROMATOGRAPHIE LIQUIDE

(30) Priority: 06.04.2016 GB 201605838
(43) Date of publication of application: 13.02.2019
(73) Proprietor: Cytiva Sweden AB, 751 84 Uppsala (SE)
(72) Inventor: BANGTSSON, Petra, 751 84 Uppsala (SE); NYHOLM, Lena, 751 84 Uppsala (SE); GORANSSON, Bengt, 751 84 Uppsala (SE)
(74) Representative: Wu, Ping
(86) International application number: PCT/EP2017/058287
(87) International publication number: WO 2017/174742

(56) References cited:
- WO-A1-2013/028828
- WO-A2-2013/074629
- JP-A- 2016 003 954
- US-A1- 2006 027 490
- US-A1- 2007 101 273

## Description

### TECHNICAL FIELD

The present invention relates to a method and system for providing information from a fraction collector in a liquid chromatography system. In particular, the invention concerns the graphical representation of information relating to fractions collected by a fraction collector downstream of a chromatography system and/or the vessels for collecting the fractions.

### BACKGROUND

Within the field of liquid chromatography, a mixture containing a plurality of substances is generally separated by a column, and a fluid output or eluate from the column is subjected to analysis and subsequently fractioned in a plurality of receiving vessels in a fraction collector. A computer serves as a processing unit and as a user interface and allows the user to adapt and control the process, and the computer also serves to present data and results to the user in the form of a chromatogram with peaks corresponding to different substances in the mixture. The computer display may also present a process picture with symbols for the various parts of the chromatography system and allow the user to control the process to some degree by interacting with the process picture, for instance by clicking on a component to alter its operation.

The possible interactions between the user and the system are, however, often limited and it is not possible to fully determine the state of the chromatography system and its current operation. The user is thereby prevented from making decisions based on these factors and the control of the system becomes cumbersome and unsatisfactory. An improved system and method are therefore desirable.

WO2013/074629 discloses a system and method that facilitate the setup and visualization of a configurable process. A user interface displays category regions representing sections of a process and displays a plurality of selectable items representing components appropriate for placement in the category regions. A user interface control causes selection of one of the selectable items and placement of the selected item into one of the category regions, to define a selected process configuration. When the computer displaying the user interface is also connected to the system being configured, the user interface may also facilitate setup, monitoring, and control of the resulting process.

US2007/101273 discloses a system and method for viewing and screening data from multiple analysis instruments in a single display, a display device coupled to a processor, displays a universal browser window. The browser window includes a first portion and a second portion. A memory also coupled to the processor, has stored therein a software program including instructions for execution by the processor. The software program includes instructions for saving a first set of data relating to a first batch of sample(s) from a first analysis instrument in a first format, saving a second set of data relating to the first sample from a second analysis instrument in the first format, combining the first set of data and the second set of data into a first file, storing the first file in the memory, displaying the first set of data in the first portion of the universal browser window, and displaying the second set of data in the second portion of the universal browser window in conjunction with the display of the first set of data in the first portion of the browser window.

JP2016003954 discloses a liquid chromatograph apparatus for preparative isolation comprises: a column 1; preparative isolation means 2 for performing preparative isolation of an eluent; a detector 3 for the eluent; analysis means 4 of the eluent; display means for an analysis result; arithmetic control means for controlling the display means and data storage means. The analysis means performs qualitative analysis of the eluent continuously, and the data storage means stores a measurement result by the detector, the qualitative analysis data by the analysis means, and an acquisition position of respective fraction which is preparative isolated by the preparative isolation means. The display means displays a correspondence between the respective fraction and the chromatograph. Based on the correspondence between the respective fraction and the chromatograph, the qualitative analysis data about a desired preparative isolated sample is displayed.

US2006/027490 discloses a chromatography system and method for analyzing a sample of interest. The chromatography system can include a housing, a cartridge holder coupled to the housing and formed to hold a chromatography cartridge containing a stationary phase, a collection vessel stand holder coupled to the housing and formed to hold a collection vessel stand, and a pump coupled to the housing. A fluid path can be coupled to the housing and can connect the pump to the cartridge holder to direct a mobile phase from the pump to the cartridge holder and can further connect the cartridge holder to the collection vessel stand holder to direct the mobile phase from the cartridge holder to the collection vessel stand holder. The chromatography system can further include a detector positioned along the fluid path between the cartridge holder and the collection vessel stand holder, and a controller integrally coupled to the housing.

WO2013028828 discloses a modular automated chromatography system, valves, pumps, detectors, sample loops, fraction collectors and the like are individually incorporated into modules that are mountable in interchangeable manner at individual mounting sites on a base unit which also supports one or more chromatography columns. Each module includes fluid connections to other modules and a microcontroller joining the module to a computed and monitor through an electronic connector at each mounting site. The fluid connections between the modules and the column(s) are removed from the electronic connections and accessible to the user. A software platform recognizes the modules and their locations, coordinates fluid connections between the modules, and provides a variety of control, monitoring, data generating and data processing functions to generate chromatographic data.

### SUMMARY OF THE INVENTION

The object of the present invention is to eliminate or at least to minimize the problems described above. This is achieved through a method and system for providing information from a fraction collector in a liquid chromatography system according to the appended independent claims, where at least one parameter of the fraction collector is determined and displayed to allow a user improved insight into the operation of the system. Various aspects and embodiments of the present invention, as defined by the appended claims, are provided.

Additional benefits of the invention will become readily apparent to the person skilled in the art in view of the detailed description below.

### DRAWINGS

The invention will now be described in more detail with reference to the appended drawings, wherein:
Fig. 1 discloses a prior art liquid chromatography system;
Fig. 2 discloses a graphical representation for visualising a liquid chromatography system and fraction collector according to a preferred embodiment of the invention;
Fig. 3 discloses a schematic view of a method according to the present invention; and
Fig. 4 discloses a schematic view of a system with a processing unit operatively connected to a liquid chromatography system of the type illustrated in Fig. 2.

### DETAILED DESCRIPTION

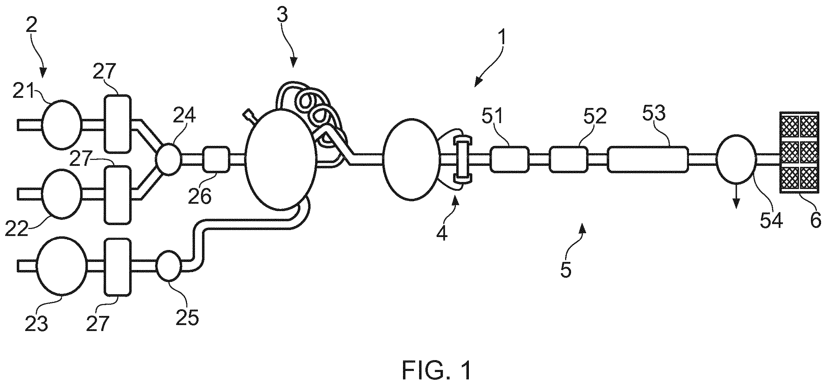

Fig. 1 discloses a liquid chromatography system 1 according to the prior art and will be described in general terms. As is obvious to the person skilled in the art, however, there are a number of variations and modifications available for a liquid chromatography system and these will not be described.

Thus, a liquid chromatography system has an input 2 with reservoirs containing solutions and/or buffers for insertion into a chromatography column 4, said reservoirs connected to inlet valves 21, 22, 23 directing a flow from the reservoirs. The flow is pumped via pumps 27 and passes system pressure detectors 24 and a mixer 26. An injection valve 3 is optionally arranged to control the flow of fluids from the reservoirs to the column 4 and may alternate between injecting solution from a solution reservoir connected to sample inlet valve 23 and injecting buffer from at least one but preferably two or more buffer reservoirs that are connected to buffer inlet valves 21, 22. The buffer thus passes pressure detectors 27 and the pressure detector 24 before being mixed by the mixer 26. The sample is in this system transported to the injection valve 3 via a pump 27 and sample pressure detector 25 but may optionally also be injected into a loop of the injection valve 3. In other liquid chromatography systems the injection valve may also be omitted and the sample and buffer inserted into the column directly.

From the column 4 a fluid output or eluate is analysed by a measuring device 5 that may comprise a plurality of devices for different types of analysis. In Fig. 1, a UV detector 51 is arranged to use UV light to measure absorbance and a conductivity measuring device 52 is arranged to measure conductivity in the fluid output. A flow restrictor 53 is also provided to create a steady backpressure and an exit valve 54 is arranged to direct the fluid output towards a fraction collector 6, where it is fractioned into a plurality of receiving vessels, or alternatively to allow the fluid output to exit the chromatography system without being fractioned. The exit valve may also have other exits, such as a waste exit and a plurality of output exits to divide the flow into larger fractions than would be possible in the fraction collector 6 itself, perhaps into one or more bottles placed adjacent to the system 10. The measuring device 5 may also comprise other detectors such as a pH detector for instance, and serves to monitor the separation process in the column 4 by measuring different properties of the fluid output.

The receiving vessels may for instance be test tubes, wells or bottles, or a combination of these, and serve to collect and hold a fluid in the fraction collector 6.

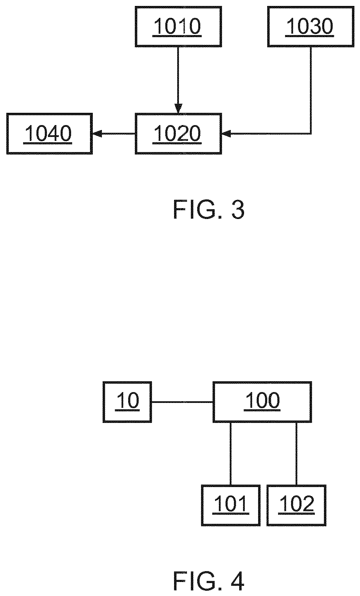

The inventors have realised that the system described above could be improved by making the usability of the system easier. To this end, a user controlling and monitoring the separation process in the liquid chromatography system may instruct the system and provide set values for parameters such as solution concentration or flow rate by interacting with a processing unit 100 (as shown in Fig 4) that is generally in the form of a processing unit such as a computer having a display 101 and input means 102 such as a keyboard or a touch screen that are operatively connected to the processing unit 100. The input means 102 may further be a cell phone, a tablet computer or similar.

The processing unit 100 receives input from the system 1 and also provides control signals to the various components of the system 1 disclosed in Fig. 1 and also receives and stores data from the measuring device 5 and can display the data in various forms, for instance as a chromatogram. The prior art system disclosed by Fig. 1 does not, however, detect, store or present data regarding the fraction collector and the fluid output that has been fractioned and thereby prevents a more versatile interaction between the user and the system. It is to be noted that the input 102 may also be connected to the processing unit 100 through a wireless connection such as a network, an internet connection or a cloud connection. The display 101 can also be separate from the processing unit 100 and communicate through a wireless connection. Furthermore, the processing unit 100 may be operatively connected to a plurality of displays 101, at least some of which may be connected by a wireless connection and may be located remotely.

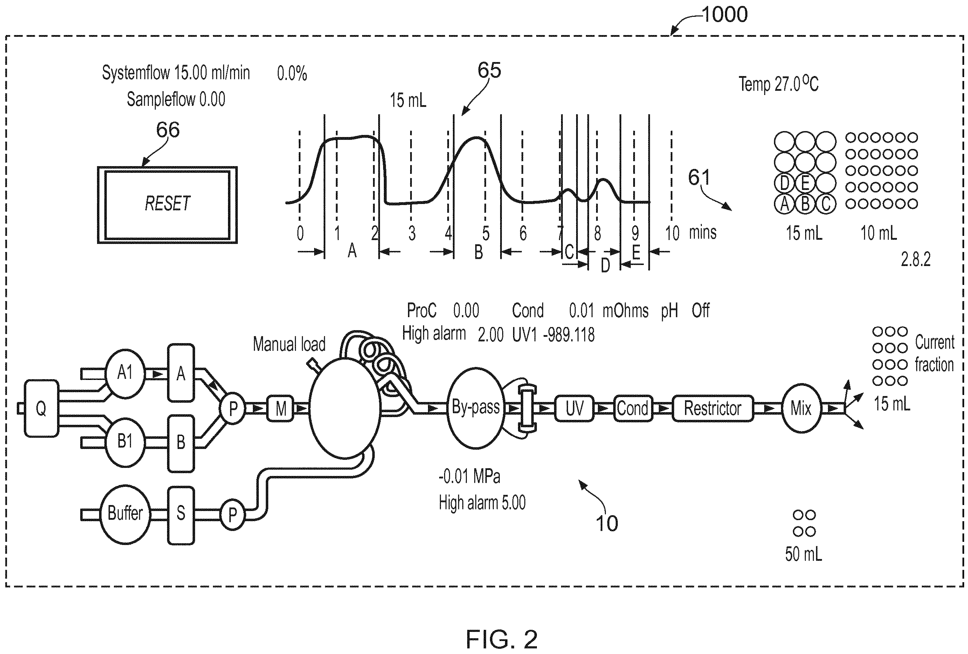

Fig. 2 discloses a typical image 1000 from a graphical representation, displayed on the display 101 and representing a liquid chromatography system 10 similar to the physical system 1 described above. The system 10 generally comprises the components already shown and described in Fig. 1 and is operated in a similar way, but is also arranged to determine and display parameters of the fraction collector 6 and also allows for a combination of such parameters with information from the measuring device 5 to allow an improved interaction of the user with the chromatography system 10. The image 1000 can show the path of fluids in the system 10, in this case by changing the colour of the path which is currently being used, supplemented in this illustration by arrows. An animation could also be used where flow can be shown which appears to move. The fraction collection information 61 in this case can be visualised as alternative arrangements of vessels shown in plan view, with graphical or numerical information beside the plan view providing indications of certain parameters.

Thus, the processing unit 100 receives parameters and displays them on the display 101 in the form of detailed fraction information 61 that forms part of theimage 1000 that also includes other features and components of the chromatography systems.

One parameter of the fraction collector 6 can be a position of at least one receiving vessel in the fraction collector and by displaying this in the detailed fraction information 61, the user can identify a specific receiving vessel and see its placement in the fraction collector 6. For example, the user may be provided with a graphical display 62 as part of information 61 displayed on the display 101, in the form of a graphical display showing a labelled plan view of an array of selectable fraction collection vessels. Another parameter may be a content of the receiving vessel, and this parameter may be combined with information from the detectors of the measuring device 5 so that detailed information of the content may be presented on the display 101 at the same time as the receiving vessel is identified.

A parameter of the fraction collector can also be an identification of a receiving vessel currently receiving the fluid output or an identification of a receiving vessel that is arranged to receive the fluid output immediately after the test receiving vessel currently receiving the fluid output. For example the display may be animated such that the current position of the vessel receiving fractionated liquid is displayed in real-time, for example[le by changing colour or some other time dependent indication. This allows the user to follow the operation of the liquid chromatography more closely and see how the fluid output passing the detector at a given time is going to be fractioned. A parameter may also be an indication of the receiving vessels or wells that contain the fluid output, to show how many of the receiving vessels that have been used in the current run of the system.

In accordance with the present invention, the parameter of the fraction collector 6 and information from the measuring device 5 are an identification of a specific portion of the fluid output and an indication of the receiving vessel that contains said specific portion. For example the position of the fraction dispenser 54 can be determined and a relevant X-Y position can be stored in a memory. The data in that memory can be compared with mass flow data from the measuring device 5 to provide an indication of what portion of the fractionated flow was dispensed at what X-Y position. That data when compared to the plan data for the position of each vessel can provide an indication of what portion is in each vessel. Where live concentration data is provided from a spectrophotometer incorporated into the measuring device 5, the user may then track any given portion and find out where it is fractioned, and a concentration and/or an amount of a substance in said portion can also be shown in the image 1000 on the display 101. Further the user can select a part of a curve in the chromatogram 65, which is shown as part of the same image 1000, but may be displayed on a different image, for instance a peak in concentration of a protein or the like, and the display then provides data relating to time (1 to 10 minutes here) and any peaks in concentration and also shows in which receiving vessel (A to D) the portion corresponding to that peak is located. A step of the method of the present invention is to select a plurality of receiving vessels, or a part of the chromatogram, and have the system provide a combination of the information or data corresponding to the contents of those receiving vessels or that part of the chromatogram. The combination is displayed and is used for subsequent computations to yield further data of interest. Further, the user can select when to switch receiving vessels for example in order to better capture the whole peak of concentration displayed in real time i.e. almost instantaneously as the concentration measurements are performed, recorded and displayed on the display 101 . Thus in Fig 2 the chromatograph 65 illustrates that collection vessel A has been selected to capture an initial peak and vessels B, C and D have been selected to capture succeeding peaks. Those vessels are visualised, in this case to the right of the chromatograph at the fraction information area 61. Other vessels can accommodate the fractionated flow between the peaks of concentration which are of lesser interest. In this case the current vessel is vessel E.

To facilitate the planning of a run of the chromatography system, it can be shown how many receiving vessels that are required for a specific run given the amount of fluid input to the column 4, and it can also be shown how many receiving vessels that are already provided in the fraction collector 6. The user can then decide if additional receiving vessels need to be added before the process or run begins. To provide information for this parameter the receiving vessels used will be identified and by matching data relating to the capacity of the vessels with the identification data it is possible to calculate the total receiving capacity of the vessels used. Further data relating to the total expected volume of liquids used in a chromatographic process can be used to determine the number of those vessels needed before a run starts. To provide such data the vessels can be scanned using a technique described in US8726944 where a multi-well receiving vessel need not have identification means, but rather is scanned in X and Y directions to count the number of well present, and an estimation of its capacity can be made if the capacity of each well is estimated. If the capacity of each well is known then the capacity can be determined with more accuracy. Thereby, the means for determining the parameter of the fraction collector 6 preferably comprises at least one optical scanner mounted inside the fraction collector. Preferably, the optical scanner can move in two dimensions (i.e. in a plane) and thereby scan all the receiving vessels from above. The means for determining the parameter may also comprise other sensors and may comprise embedded software in the fraction collector that controls the fractioning into the receiving vessels.

By giving input to the input means, i.e. to the keyboard, touch screen or mouse, the user can select a receiving vessel and the processing unit 100 can display information relating to the contents of that receiving vessel on the display 101, either at image 1000, or using a pop-up window overlying image 1000, or on a separately displayed image.

Thus, as disclosed in Fig. 3, the method of the present invention comprises determining 1010 at least one parameter of the fraction collector 6 and providing 1020 information of said parameter on a display 101. Means for determining the parameter may comprise a sensor or an optical detector present in the fraction collector and may also comprise a detector arranged to determine a flow of the fluid output into the fraction collector 6. The means for determining the parameter can also include a sensor or the like for determining the movement of an arm or similar to achieve an insertion of the fluid output into a specific receiving vessel. The method also comprises receiving 1030 information from the measuring device 5 and displaying this information together with the parameter from the fraction collector 6.

The method of the present invention can also comprise controlling 1040 the system 10 in response to said at least one parameter of the fraction collector 6 and/or said information from the measuring device 5. This gives the user the opportunity to control the fraction collector 6 directly and also to control and modify other parts of the system, for instance by selecting into which receiving vessels the fluid output is to be fractioned and also determine the order of receiving vessels to be used subsequently. The user can also select settings for the fraction collector 6, ask the processing unit 100 to combine or pool the contents of a plurality of receiving vessels and perform calculations on the resulting combination or pool. This control can be done in real time if desired. Furthermore, the user can select parameters for subsequent calculations or analysis and in general control or alter all the parameters of the fraction collector.

One arrangement for performing the user control mentioned above is to provide areas of the image 1000 which represent user input areas, and so by either hovering a cursor over those areas, or touching those areas, the user can control the system's 10 operation. One example of an instructional user input area is a RESET area 66 shown in Fig 2 where an instruction to reset the parameters determined can be input, for example once a chromatography run has been completed. In practice the input means 102 and the display 101 shown in Fig 4 may be the same component, for example a touch screen, or may work in tandem, for example a mouse used to select different instructional areas on the screen.

The invention also comprises a computer program product arranged to be provided in a system for providing information from a fraction collector in a liquid chromatography system as described above. The computer program product is preferably stored and executed on the processing unit 100 and comprises instructions for causing the processing unit to perform the method steps of the method disclosed above.

## Claims

1. A method for providing information from a fraction collector in a liquid chromatography system, the system (10) comprising a column (4), at least one reservoir (2) for containing a fluid, at least one pump (21, 22) connected to said reservoir, the column (4) arranged to receive an input from the reservoir (2), a measuring device (5) for performing measurements on a fluid output from the column (4), and a fraction collector (6) for receiving said fluid output in a plurality of receiving vessels, wherein the method comprises:
determining (1010) at least one parameter of the fraction collector (6), and
providing (1020) information relating to said parameter in the form of a graphical representation (1000) on a display (101),
the method further comprising receiving (1030) information from said measuring device (5) and providing said information together with the information of the parameter, in the form of a curve, on the display (101),and
**characterised in that** said information from the measuring device (5) is an identification of a specific portion of the fluid output and said parameter is an indication of the receiving vessel that contains said specific portion of the fluid output, the curve provides data relating to time and any peaks in concentration and also shows in which receiving vessel the portion corresponding to that peak is located, the method further comprises:
combining information of at least two portions of the fluid output by selecting a plurality of receiving vessels that contain the at least two portions of the fluid output or by selecting part of the curve and displaying the combined information together with the indication of the receiving vessels that contain said at least two portions of the fluid output such that portions of specific interest can be pooled and treated as one during subsequent analysis.

2. The method according to claim 1, wherein the method further comprises controlling (1040) the system (10) in response to said at least one parameter of the fraction collector (6) and/or said information from the measuring device (5), said controlling being provided by user input, optionally during chromatographic operation of said system.

3. The method according to claim 1 or 2, further comprising determining and displaying a concentration and/or an amount of a substance in at least one of said at least two portions.

4. The method according to any previous claim, further comprising determining and displaying how many receiving vessels are required for receiving the fluid output of the column (4).

5. The method according to claim 4, further comprising determining and displaying the number of required receiving vessels compared to the number of receiving vessels currently in the fraction collector.

6. The method according to any previous claim, further comprising selecting a receiving vessel in the fraction collector and indicating at least one information in a chromatogram (65) corresponding to a fluid output currently contained in said receiving vessel.

7. A chromatography system for providing information from a fraction collector, the system (10) comprising a column (4), at least one reservoir (2) for containing a fluid, at least one pump (21, 22) connected to said reservoir (2), a column (4) arranged to receive an input from the reservoir (2), a measuring device (5) for performing measurements on a fluid output from the column (4), and a fraction collector (6) for receiving said fluid output in a plurality of receiving vessels, and further comprising:
means for determining at least one parameter of the fraction collector, and
a display (101) arranged to receive and display information relating to said parameter in the form of a graphical representation (1000), and yet further comprising a processing unit (100) operatively connected at least to the measuring device (5) and the fraction collector (6), operable to perform the method of any one of claims 1 to 6.

8. The system (10) according to claim 11, wherein the means for determining at least one parameter of the fraction collector (6) comprises at least one optical scanner.

9. A computer program product arranged to be provided in a system for providing information from a fraction collector in a liquid chromatography system, the system (2) comprising a column (4), at least one reservoir (2) for containing a fluid, at least one pump (21, 22) connected to said reservoir (2), a column (4) arranged to receive an input from the reservoir (2), a measuring device (5) for performing measurements on a fluid output from the column (4), a fraction collector (6) for receiving said fluid output in a plurality of receiving vessels, and a processing unit (100) operatively connected to the fraction collector (6) and the measuring device (5), said computer program product comprising instructions for causing the processing unit to perform the method steps of the method of any one of claims 1 to 6.

10. A method, system or program as claimed in any one of the preceding claims wherein the graphical representation is animated, to show fluid flow, and/or real time changes in said parameters or information.

11. A method, system or program as claimed in any preceding claim wherein the graphical representation includes one or more instructional areas allowing user input to control the system in real time.

## Patentansprüche

1. Verfahren zur Bereitstellung von Informationen aus einem Fraktionssammler in einem Flüssigchromatografiesystem, wobei das System (10) eine Säule (4), mindestens ein Reservoir (2) zur Enthaltung eines Fluids, mindestens eine mit dem Reservoir verbundene Pumpe (21, 22), wobei die Säule (4) so angeordnet ist, dass sie eine Einspeisung aus dem Reservoir (2) aufnimmt, eine Messvorrichtung (5) zur Durchführung von Messungen an einer Fluidausgabe aus der Säule (4) und einen Fraktionssammler (6) zur Aufnahme der Fluidausgabe in einer Vielzahl von Aufnahmegefäßen umfasst, wobei das Verfahren Folgendes umfasst:
Bestimmen (1010) mindestens eines Parameters des Fraktionssammlers (6) und
Bereitstellen (1020) von Informationen in Bezug auf den Parameter in Form einer grafischen Darstellung (1000) auf einer Anzeige (101),
wobei das Verfahren weiter das Empfangen (1030) von Informationen von der Messvorrichtung (5) und das Bereitstellen dieser Informationen zusammen mit den Informationen des Parameters in Form einer Kurve auf der Anzeige (101) umfasst, und
**dadurch gekennzeichnet, dass** die Informationen von der Messvorrichtung (5) eine Identifizierung eines bestimmten Teils der Fluidausgabe sind und der Parameter eine Angabe des Aufnahmegefäßes ist, der den bestimmten Teil der Fluidausgabe enthält, wobei die Kurve Daten in Bezug auf die Zeit und etwaige Konzentrationsspitzen liefert und auch anzeigt, in welchem Aufnahmegefäß sich der diesem Spitzenwert entsprechende Teil befindet, wobei das Verfahren weiter Folgendes umfasst:
Kombinieren von Informationen über mindestens zwei Teile der Fluidausgabe durch Auswählen einer Vielzahl von Aufnahmegefäßen, die die mindestens zwei Teile der Fluidausgabe enthalten, oder durch Auswählen eines Teils der Kurve und Anzeigen der kombinierten Informationen zusammen mit der Angabe des Aufnahmegefäßes, die die mindestens zwei Teile der Fluidausgabe enthalten, sodass Teile von besonderem Interesse zusammengefasst und bei der anschließenden Analyse als ein Teil behandelt werden können.

2. Verfahren nach Anspruch 1, wobei das Verfahren weiter das Steuern (1040) des Systems (10) in Reaktion auf den mindestens einen Parameter des Fraktionssammlers (6) und/oder die Informationen von der Messvorrichtung (5) umfasst, wobei das Steuern durch eine Benutzereingabe bereitgestellt wird, optional während des chromatografischen Betriebs des Systems.

3. Verfahren nach Anspruch 1 oder 2, weiter umfassend das Bestimmen und Anzeigen einer Konzentration und/oder einer Menge einer Substanz in mindestens einem der mindestens zwei Teile.

4. Verfahren nach einem der vorstehenden Ansprüche, weiter umfassend das Bestimmen und Anzeigen, wie viele Aufnahmegefäße zur Aufnahme der Fluidausgabe der Säule (4) erforderlich sind.

5. Verfahren nach Anspruch 4, weiter umfassend das Bestimmen und Anzeigen der Anzahl der erforderlichen Aufnahmegefäße im Vergleich zu der Anzahl der derzeit in dem Fraktionssammler befindlichen Aufnahmegefäße.

6. Verfahren nach einem der vorstehenden Ansprüche, weiter umfassend das Auswählen eines Aufnahmegefäßes in dem Fraktionssammler und das Anzeigen mindestens einer Information in einem Chromatogramm (65), die einer derzeit in dem Aufnahmegefäß enthaltenen Fluidausgabe entspricht.

7. Chromatografiesystem zur Bereitstellung von Informationen aus einem Fraktionssammler, wobei das System (10) eine Säule (4), mindestens ein Reservoir (2) zur Enthaltung eines Fluids, mindestens eine mit dem Reservoir (2) verbundene Pumpe (21, 22), eine Säule (4), die so angeordnet ist, dass sie eine Einspeisung aus dem Reservoir (2) aufnimmt, eine Messvorrichtung (5) zur Durchführung von Messungen an einer Fluidausgabe aus der Säule (4) und einen Fraktionssammler (6) zur Aufnahme der Fluidausgabe in einer Vielzahl von Aufnahmegefäßen umfasst, und weiter Folgendes umfassend:
Mittel zur Bestimmung mindestens eines Parameters des Fraktionssammlers, und
eine Anzeige (101), die so angeordnet ist, dass sie Informationen in Bezug auf den Parameter in Form einer grafischen Darstellung (1000) empfängt und anzeigt, und die weiter eine Verarbeitungseinheit (100) umfasst, die mindestens mit der Messvorrichtung (5) und dem Fraktionssammler (6) funktionsfähig verbunden ist und so betrieben werden kann, dass sie das Verfahren nach einem der Ansprüche 1 bis 6 ausführt.

8. System (10) nach Anspruch **11,** wobei die Mittel zur Bestimmung mindestens eines Parameters des Fraktionssammlers (6) mindestens einen optischen Scanner umfassen.

9. Computerprogrammprodukt, das dazu eingerichtet ist, in einem System zur Bereitstellung von Informationen aus einem Fraktionssammler in einem Flüssigchromatografiesystem bereitgestellt zu werden, wobei das System (2) eine Säule (4), mindestens ein Reservoir (2) zur Enthaltung eines Fluids, mindestens eine Pumpe (21, 22), die mit dem Reservoir (2) verbunden ist, eine Säule (4), die so angeordnet ist, dass sie eine Einspeisung aus dem Reservoir (2) aufnimmt, eine Messvorrichtung (5) zur Durchführung von Messungen an einer Fluidausgabe aus der Säule (4), einen Fraktionssammler (6) zur Aufnahme der Fluidausgabe in einer Vielzahl von Aufnahmegefäßen und eine Verarbeitungseinheit (100), die funktionsfähig mit dem Fraktionssammler (6) und der Messvorrichtung (5) verbunden ist, umfasst, wobei das Computerprogrammprodukt Instruktionen umfasst, die die Verarbeitungseinheit veranlassen, die Verfahrensschritte des Verfahrens nach einem der Ansprüche 1 bis 6 auszuführen.

10. Verfahren, System oder Programm nach einem der vorstehenden Ansprüche, wobei die grafische Darstellung animiert ist, um eine Fluidströmung und/oder Echtzeitänderungen der Parameter oder Informationen darzustellen.

11. Verfahren, System oder Programm nach einem der vorstehenden Ansprüche, wobei die grafische Darstellung einen oder mehrere Instruktionsbereiche einschließt, die Benutzereingaben zur Steuerung des Systems in Echtzeit erlauben.

## Revendications

1. Procédé pour fournir des informations provenant d'un collecteur de fractions dans un système de chromatographie liquide, le système (10) comprenant une colonne (4), au moins un réservoir (2) pour contenir un fluide, au moins une pompe (21, 22) reliée audit réservoir, la colonne (4) étant conçue pour recevoir une entrée provenant du réservoir (2), un dispositif de mesure (5) pour effectuer des mesures sur une sortie de fluide provenant de la colonne (4), et un collecteur de fractions (6) pour recevoir ladite sortie de fluide dans une pluralité de récipients de réception, dans lequel le procédé comprend :
la détermination (1010) d'au moins un paramètre du collecteur de fractions (6),
et
la fourniture (1020) d'informations relatives audit paramètre sous la forme d'une représentation graphique (1000) sur une unité d'affichage (101),
le procédé comprenant en outre la réception (1030) d'informations provenant dudit dispositif de mesure (5) et la fourniture desdites informations conjointement avec les informations du paramètre, sous la forme d'une courbe, sur l'unité d'affichage (101),et
**caractérisé en ce que** lesdites informations provenant du dispositif de mesure (5) sont une identification d'une partie spécifique de la sortie de fluide et ledit paramètre est une indication du récipient de réception qui contient ladite partie spécifique de la sortie de fluide, la courbe fournit des données relatives au temps et à tout pic de concentration et montre également dans quel récipient de réception la partie correspondant à ce pic est située, le procédé comprend en outre :
la combinaison d'informations d'au moins deux parties de la sortie de fluide par la sélection d'une pluralité de récipients de réception qui contiennent les au moins deux parties de la sortie de fluide ou par la sélection d'une partie de la courbe et l'affichage des informations combinées conjointement avec l'indication des récipients de réception qui contiennent lesdites au moins deux parties de la sortie de fluide de telle sorte que des parties d'intérêt spécifique puissent être regroupées et traitées en une seule lors d'une analyse ultérieure.

2. Procédé selon la revendication 1, dans lequel le procédé comprend en outre la commande (1040) du système (10) en réponse audit au moins un paramètre du collecteur de fractions (6) et/ou auxdites informations provenant du dispositif de mesure (5), ladite commande étant fournie par une entrée d'utilisateur, facultativement pendant un fonctionnement chromatographique dudit système.

3. Procédé selon la revendication 1 ou la revendication 2, comprenant en outre la détermination et l'affichage d'une concentration et/ou d'une quantité d'une substance dans au moins une desdites au moins deux parties.

4. Procédé selon l'une quelconque des revendications précédentes, comprenant en outre la détermination et l'affichage de la quantité de récipients de réception requis pour recevoir la sortie de fluide de la colonne (4).

5. Procédé selon la revendication 4, comprenant en outre la détermination et l'affichage du nombre de récipients de réception requis par rapport au nombre de récipients de réception actuellement dans le collecteur de fractions.

6. Procédé selon l'une quelconque des revendications précédentes, comprenant en outre la sélection d'un récipient de réception dans le collecteur de fractions et l'indication d'au moins un élément d'informations dans un chromatogramme (65) correspondant à une sortie de fluide actuellement contenue dans ledit récipient de réception.

7. Système de chromatographie pour fournir des informations provenant d'un collecteur de fractions, le système (10) comprenant une colonne (4), au moins un réservoir (2) pour contenir un fluide, au moins une pompe (21, 22) reliée audit réservoir (2), une colonne (4) conçue pour recevoir une entrée provenant du réservoir (2), un dispositif de mesure (5) pour effectuer des mesures sur une sortie de fluide provenant de la colonne (4), et un collecteur de fractions (6) pour recevoir ladite sortie de fluide dans une pluralité de récipients de réception, et comprenant en outre :
un moyen pour déterminer au moins un paramètre du collecteur de fractions,
et
une unité d'affichage (101) conçue pour recevoir et afficher des informations relatives audit paramètre sous la forme d'une représentation graphique (1000), et comprenant également en outre une unité de traitement (100) fonctionnellement connectée au moins au dispositif de mesure (5) et au collecteur de fractions (6), utilisable pour mettre en œuvre le procédé selon l'une quelconque des revendications 1 à 6.

8. Système (10) selon la revendication **11,** dans lequel le moyen pour déterminer au moins un paramètre du collecteur de fractions (6) comprend au moins un scanner optique.

9. Produit-programme informatique conçu pour être fourni dans un système pour fournir des informations provenant d'un collecteur de fractions dans un système de chromatographie liquide, le système (2) comprenant une colonne (4), au moins un réservoir (2) pour contenir un fluide, au moins une pompe (21, 22) reliée audit réservoir (2), une colonne (4) conçue pour recevoir une entrée provenant du réservoir (2), un dispositif de mesure (5) pour effectuer des mesures sur une sortie de fluide provenant de la colonne (4), un collecteur de fractions (6) pour recevoir ladite sortie de fluide dans une pluralité de récipients de réception, et une unité de traitement (100) reliée fonctionnellement au collecteur de fractions (6) et au dispositif de mesure (5), ledit produit-programme informatique comprenant des instructions pour amener l'unité de traitement à effectuer les étapes de procédé du procédé selon l'une quelconque des revendications 1 à 6.

10. Procédé, système ou programme selon l'une quelconque des revendications précédentes, dans lequel la représentation graphique est animée, pour montrer un écoulement de fluide, et/ou des changements en temps réel desdit(e)s paramètres ou informations.

11. Procédé, système ou programme selon l'une quelconque des revendications précédentes, dans lequel la représentation graphique inclut une ou plusieurs zones d'instruction permettant à une entrée d'utilisateur de commander le système en temps réel.
